# EUROPÄISCHE PATENTANMELDUNG

(11) **EP 1 251 336 A2**
(43) Veröffentlichungstag der Anmeldung: **23.10.2002**
(21) Anmeldenummer: 02100375.1
(22) Anmeldetag: 16.04.2002
(51) Int. Cl.: G01D 5/16

(54) **Anordnung zum Bestimmen der Position eines Bewegungsgeberelements**

(30) Priorität: 17.04.2001 DE 10118819
(71) Anmelder: Philips Corporate Intellectual Property GmbH, 20099 Hamburg (DE); Koninklijke Philips Electronics N.V., 5621 BA Eindhoven (NL)
(72) Erfinder: Butzmann, Stefan, 52066, Aachen (DE)
(74) Vertreter: Volmer, Georg, Dipl.-Ing.

(57) **Zusammenfassung**

Beschrieben wird eine Anordnung zum Bestimmen der Position eines die Ausbildung eines Magnetfeldes periodisch entlang seiner Bewegungskoordinate beeinflussenden Bewegungsgeberelements mit einem Sensorelement, welches entlang einer Meßrichtung gegenüber wenigstens der Polarität des Magnetfeldes empfindlich und zum Abgeben eines Meßsignals in Abhängigkeit von einer in der Meßrichtung gemessenen, als Meßfeld bezeichneten Feldkomponente des Magnetfeldes ausgebildet ist, wobei die Meßrichtung des Sensorelements wenigstens nahezu rechtwinklig zur Bewegungskoordinate des Bewegungsgeberelements ausgerichtet ist.

Dadurch wird eine Anordnung zum Bestimmen der Position eines Bewegungsgeberelements mit einer "True-Power-On-Fähigkeit" geschaffen.

## Beschreibung

Die Erfindung bezieht sich auf eine Anordnung zum Bestimmen der Position eines Bewegungsgeberelements.

Es sind Anordnungen zur Messung der Drehgeschwindigkeit eines rotierenden Bewegungsgeberelements mit einem Sensorelement beschrieben worden, welches den magnetoresistiven Effekt ausnutzt. Darin umfaßt dieses magnetoresistive Sensorelement vier Permalloy-Streifen, die in Mäanderform auf einem Siliziumsubstrat angeordnet und in Wheatstonescher Brückenanordnung verschaltet sind. Das magnetoresistive Sensorelement ist entlang einer Meßrichtung gegenüber der Polarität und der Feldstärke eines äußeren Magnetfeldes empfindlich und zum Abgeben eines Meßsignals in Abhängigkeit von einer in der Meßrichtung gemessenen, als Meßfeld bezeichneten Feldkomponente des Magnetfeldes ausgebildet.

Da durch den magnetoresistiven Effekt unmittelbar eine Drehbewegung des Bewegungsgeberelements nicht direkt gemessen werden kann, ist am magnetoresistiven Sensorelement zusätzlich ein als Arbeitsmagnet bezeichneter Permanentmagnet montiert. Dieser Arbeitsmagnet ist auf die Rückseite des magnetoresistiven Sensorelements bzw. seines Gehäuses geklebt, so dass das magnetoresistive Sensorelement vom Magnetfeld des Arbeitsmagneten durchsetzt wird, allerdings in dieser Zusammenstellung für sich gsnommen ohne das Bewegungsgeberelement noch keine Feldkomponente des Magnetfeldes in der Meßrichtung auftritt. Das vom magnetoresistiven Sensorelement abgegebene Meßsignal ist in dieser Konfiguration gleich Null.

Wird ein mit zahnradartig ausgeformtem, ferromagnetischem Material ausgsbildetes Bewegungsgeberelement in der Nähe des Sensors angeordnet, führt dies zu einer Veränderung des Feldverlaufs des Magnetfelds des Arbeitsmagneten. Dazu ist das magnetoresistive Sensorelement gegenüber den Zähnen des mit zahnradartig ausgeformtem, ferromagnetischem Material ausgsbildeten Bewegungsgeberelements mit seiner Meßrichtung in der Bewegungsrichtung des Bewegungsgeberelements ausgerichtet. Die Zähne des Bewegungsgeberelements bewegen sich somit in dieser Meßrichtung am Sensorelement vorbei. Dies führt entlang der mit der Meßrichtung zusammenfallenden Bewegungskoordinate des Bewegungsgeberelements zu einer mit dem Abstand der Zähne der zahnradartigen Ausformungen des Bewegungsgeberelements periodisch auftretenden Verformung der Feldlinien des Magnetfelds des Arbeitsmagneten in der Meßrichtung des Sensorelements. An einer "symmetrischen" Position, in der sich das Sensorelement mittig vor einem Zahn oder einer Lücke zwischen zwei Zähnen befindet, wird dabei das Magnetfeld nicht in der Bewegungsrichtung des Bewegungsgeberelements verformt; somit ist in dieser Position das Ausgangssignal des Sensorelements gleich Null. An einer "nicht symmetrischen" Position, in der das Sensorelement sich weder mittig vor einem Zahn noch vor einer Lücke befindet, ergibt sich eine Feldverformung des Magnetfelds in der Bewegungsrichtung des Bewegungsgeberelements, die von der Bewegungskoordinate des Bewegungsgeberelements abhängt. Damit wird durch das Sensorelement ein von dieser Bewegungskoordinate des Bewegungsgeberelements abhängiges Ausgangssignal erzeugt, welches vorzugsweise wenigstens nahezu sinusförmig über der Bewegungskoordinate sein kann.

Wahlweise ist auch ein magnetisiertes Bewegungsgeberelement beschrieben worden, entlang dessen Bewegungsrichtung magnetische Nord- und Südpole abwechselnder Polarität angeordnet sind. In dieser Ausbildung stellt das Bewegungsgeberelement selbst das Magnetfeld und damit auch das Meßfeld bereit.

Derartige magnetoresistive Sensorelemente werden mit rotierenden Bewegungsgeberelementen in vielfältigen Systemen zur Erfassung der Drehzahl von mit den Bewegungsgeberelementen gekoppelten Rädern, Wellen oder dergleichen eingesetzt. Zu den häufigsten Anwendungsn gehört der Einsatz in Antiblockiersystemen oder als Kurbelwellendrehzahlsensor für Kraftfahrzeugs. Üblicherweise wird hierbei der Sensor vor einem Zahnrad aus magnetisierbarem Werkstoff mit vier zu einer Wheatstonebrücke der eingangs gsnannten Art verbundenen Widerständen betrieben, wobei die Meßrichtung d.h. die magnetisch empfindliche Richtung des Sensorelements in beschriebener Weise parallel zur Drehrichtungskoordinate des Zahnrads liegt.

Wie beschrieben kann hierbei das Ausgangssignal der Wheatstonebrücke in erster Näherung durch ein über der Bewegungskoordinate des Bewegungsgeberelements sinusförmiges Signal dargestellt werden, wobei die Nulldurchgänge im Ausgangssignals jeweils vor der Mitte eines Zahns bzw. vor der Mitte einer Lücke zwischen je zwei Zähnen des Bewegungsgeberelements erfolgen. Bei bewegtem Bewegungsgeberelement kann aus dem Ausgangssignal die Stellung des Bewegungsgeberelements gegenüber dem Sensorelement eindeutig bestimmt werden.

Nachteilig bei der vorstehend beschriebenen Anordnung ist die Tatsache, dass zur eindeutigen Bestimmung der Position des Bewegungsgeberelements entlang der Bewegungskoordinate sich das Bewegungsgeberelement in Bewegung befinden muß. Direkt nach der Inbetriebnahme des Sensorelements, d.h. dem Einschalten der Versorgungsspannung, ist keine eindeutige Bestimmung der Position möglich, da das Ausgangssignal nicht eindeutig ist. Beispielsweise kann ein Ausgangssignal der Wheatstonebrücke mit einem Wert von Null bedeuten, dass sich das Sensorelement mittig vor einem Zahn oder mittig vor einer Lücke befindet. Dies ist insbesondere dann von Nachteil, wenn das Bewegungsgeberelement wie z.B. bei Nockenwellen von Kraftfahrzeugmotoren nur in wenige Zähne unterteilt ist.

In vielen Anwendungen, wie z.B. bei der Erfassung der Nockenwellendrehzahl oder beim Betrieb von Kurbelwellenstartergeneratoren, ist jedoch eine eindeutige Positionsbestimmung des Bewegungsgeberelements unmittelbar bei der Inbetriebnahme erwünscht. Diese Möglichkeit einer eindeutigen Positionsbestimmung des Bewegungsgeberelements unmittelbar bei der Inbetriebnahme wird auch als "True-Power-On-Fähigkeit" bezeichnet.

Die Erfindung hat die Aufgabe, eine Anordnung zum Bestimmen der Position eines Bewegungsgeberelements mit einer solchen "True-Power-On-Fähigkeit" zu schaffen.

Erfindungsgemäß wird diese Aufgabe gelöst durch eine Anordnung zum Bestimmen der Position eines die Ausbildung eines Magnetfeldes periodisch entlang seiner Bewegungskoordinate beeinflussenden Bewegungsgeberelements mit einem Sensorelement, welches entlang einer Meßrichtung gegenüber wenigstens der Polarität des Magnetfeldes empfindlich und zum Abgeben eines Meßsignals in Abhängigkeit von einer in der Meßrichtung gemessenen, als Meßfeld bezeichneten Feldkomponente des Magnetfeldes ausgebildet ist, wobei die Meßrichtung des Sensorelements wenigstens nahezu rechtwinklig zur Bewegungskoordinate des Bewegungsgeberelements ausgerichtet ist.

Durch diese Anordnung ist es in einfacher Weise möglich, vom Sensorelement ein Ausgangssignal zu gewinnen, welches eine eindeutige Zuordnung zur Position des Sensorelements gegenüber dem Bewegungsgeberelement aufweist.

Insbesondere weist dabei das Bewegungsgeberelement in einer streifenförmigen Zone einer sich entlang der Bewegungskoordinate des Bewegungsgeberelements erstreckenden Hauptfläche angeordnete, periodisch wiederkehrende Bereiche wechselnder Beeinflussung des sich parallel zur Hauptfläche und wenigstens weitgehend rechtwinklig zur Bewegungskoordinate des Bewegungsgeberelements ausbildenden Meßfeldes auf und ist die Meßrichtung des Sensorelements wenigstens nahezu parallel zur Hauptfläche des Bewegungsgeberelements ausgerichtet.

In einer anderen Fortbildung der Erfindung weist das Bewegungsgeberelement zwei streifenförmige Zonen periodisch wiederkehrender Bereiche wechselnder Beeinflussung des Meßfeldes auf, die um wenigstens nahezu eine halbe Periode der Bereiche wechselnder Beeinflussung des Meßfeldes in Richtung der Bewegungskoordinate des Bewegungsgeberelements versetzt angeordnet sind.

Gegenüber den eingangs erwähnten Konfigurationen mit einer Orientierung der Meßrichtung des Sensorelements parallel zur Bewegungsrichtung des Bewegungsgeberelements kann bei der erfindungsgemäßen Anordnung aus der Polarität des Ausgangssignals des Sensorelements eindeutig geschlossen werden, welcher der Bereiche wechselnder Beeinflussung des Meßfeldes sich augenblicklich vor dem Sensorelement befindet, ohne dass dafür zunächst eine Relativbewegung zwischen dem Bewegungsgeberelement und dem Sensorelement erforderlich wäre. Dadurch ist eine eindeutige Erkennung der Position des Bewegungsgeberelements entlang seiner Bewegungskoordinate möglich und somit die oben erwähnte "True-Power-On-Fähigkeit" gegeben.

In einer bevorzugten Ausgestaltung der Erfindung sind die Zonen periodisch wiederkehrender Bereiche wechselnder Beeinflussung des Meßfeldes durch abwechselnd im wesentlichen senkrecht zur Hauptfläche des Bewegungsgeberelements vor- und rückspringende Ausformungen eines vom Bewegungsgeberelement umfaßten, magnetisietbaren Werkstoffs gebildet. Insbesondere ist das Bewegungsgeberelement mit zahnradartig ausgeformtem, ferromagnetischem Material ausgebildet. Entlang der Bewegungskoordinate des Bewegungsgeberelements erstreckt sich somit eine Zahn-Lücke-Konfiguration, in der die Zähne das Meßfeld in anderer Weise beeinflussen als die Lücken. Das Bewegungsgeberelement weist dazu in einem Beispiel der einfachsten Ausbildung mit nur einer Zone periodisch wiederkehrender Bereiche wechselnder Beeinflussung des Meßfeldes im wesentlichen die Form eines einfachen Zahnrades auf, wie sie für sich bereits beschrieben ist. In diesem Fall ist eine sehr einfache Realisierung der erfindungsgemäßen Anordnung möglich. In einem Beispiel für die weitere Fortbildung mit zwei Zonen periodisch wiederkehrender Bereiche wechselnder Beeinflussung des Meßfeldes kann das Bewegungsgeberelement aus zwei derartigen Zahnrädern bestehen, die axial aneinander gefügt und in Umfangsrichtung gegeneinander um wenigstens nahezu einen halben Abstand zweier benachbarter Zähne am Umfang verdreht angeordnet sind.

Die Konfigurationen nach den vorgenannten Fortbildungen der Erfindung weisen bevorzugt einen Arbeitsmagneten zum Beaufschlagen der Anordnung mit dem Magnetfeld auf, wobei die hauptsächliche Richtung der magnetischen Feldlinien des vom Arbeitsmagneten ausgehenden Magnetfeldes wenigstens weitgehend rechtwinklig sowohl zur Bewegungskoordinate des Bewegungsgeberelements als auch zur Meßrichtung des Sensorelements ausgerichtet ist. Diese Ausbildung des Arbeitsmagneten, der insbesondere als Permanentmagnet gestaltet ist, entspricht der eingangs erwähnten, aus den bereits beschriebenen Anordnungen zur Messung der Drehgeschwindigkeit entnehmbaren Form. Dieser Rückgriff auf bereits vorhandene Konstruktionselemente vereinfacht die Fertigung der erfindungsgemäßen Anordnung

In einer anderen Ausgestaltung der Erfindung sind die Zonen periodisch wiederkehrender Bereiche wechselnder Beeinflussung des Meßfeldes durch sich abwechselnde, entgegengesetzte magnetische Pole eines vom Bewegungsgeberelement umfaßten, magnetisierten Werkstoffs gebildet. Bei dieser Ausbildung des Bewegungsgeberelements, die auch als "magnetisierter Encoder" bezeichnet wird, liefert das Bewegungsgeberelement selbst das Magnetfeld, so dass ein gesonderter Arbeitsmagnet nicht erforderlich ist. Allerdings kann das Sensorelement mit einem zusätzlichen, nur ein schwaches Magnetfeld liefernden Stützmagneten verbunden werden, welches stabilisierend wirkt.

Insbesondere bei der Ausbildung des Bewegungsgeberelements mit nur einer streifenförmigen Zone periodisch wiederkehrender Bereiche wechselnder Beeinflussung des Meßfeldes ist vorteilhaft das Sensorelement gegenüber oder neben einem bezüglich der Bewegungsrichtung seitlichen Randbereich der streifenförmigen Zone periodisch wiederkehrender Bereiche wechselnder Beeinflussung des Meßfeldes des Bewegungsgeberelements angeordnet. Das Sensorelement ist somit quer zur Bewegungsrichtung des Bewegungsgeberelements "an den Rand versetzt". Das Meßfeld wird dabei durch die Ausformung des Magnetfeldes an diesem seitlichen Randbereich gebildet, in dem merkliche Magnetfeldkomponenten rechtwinklig zur Bewegungsrichtung des Bewegungsgeberelements auftreten. Damit ist eine besonders effektiv arbeitende Anordnung möglich.

In einer bevorzugten Ausgsstaltung der Erfindung ist das Sensorelement als magnetoresistives Sensorelement ausgebildet, kurz als "MR-Sensor" bezeichnet.

In einer anderen Ausgestaltung der Erfindung, in der das Bewegungsgeberelement zwei streifenförmige Zonen periodisch wiederkehrender Bereiche wechselnder Beeinflussung des Meßfeldes umfaßt, ist das Sensorelement als differentielles Hall-Sensorelement mit zwei Teil-Sensorelementen ausgestaltet, von denen je eines gegenüber je einer der Zonen periodisch wiederkehrender Bereiche wechselnder Beeinflussung des Meßfeldes angeordnet ist. Die Teil-Sensorelemente liefern dabei unterschiedliche Signale, je nachdem, vor welchem der Bereiche wechselnder Beeinflussung des Meßfeldes sie angeordnet sind. Aus diesen Signalen wird ein Differenzsignal zur weiteren Auswertung abgeleitet.

Gemäß einer weiteren Fortbildung der Erfindung kann das Bewegungsgeberelement linear ausgebildet sein. Es ist in dieser Form sehr vorteilhaft für lineare Bewegungsaufnehmer einsetzbar. In einer anderen bevorzugten Ausgsstaltung ist das Bewegungsgeberelement drehsymmetrisch ausgsbildet und für Drehbewegungsaufnehmer einsetzbar.

Eine nähere Erläuterung der Erfindung wird anhand der Zeichnung gegeben, in der
- Fig. 1: eine Anordnung zeigt, bei der die Meßrichtung des Sensorelements parallel zur Bewegungsrichtung des Bewegungsgeberelements angeordnet ist, und in der
- Fig. 2: ein Ausführungsbeispiel für eine erfindungsgemäße Anordnung zeigt.

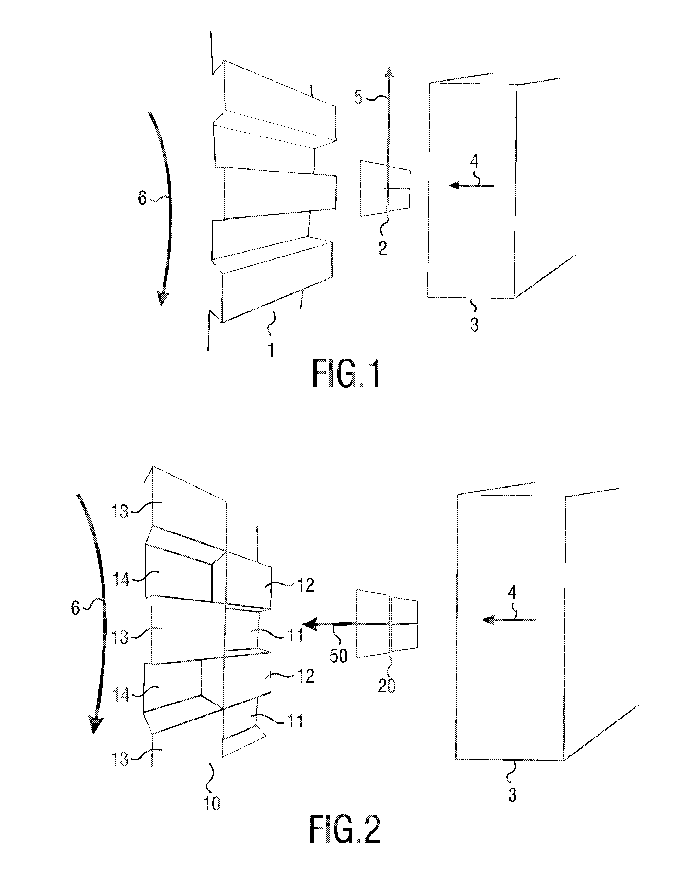

In der Anordnung nach Fig 1 ist mit dem Bezugszeichen 1 ein Zahnrad aus magnetisierbarem Werkstorf bezeichnet, welches ein Bewegungsgeberelement bildet und sich in einer mit dem Pfeil 6 angegebenen Bewegungsrichtung dreht. Vor den Zähnen des Zahnrades 1 ist ein Sensorelement 2 angeordnet, dessen Meßrichtung mit einem Pfeil mit dem Bezugszelchen 5 angegeben und parallel zur Bewegungsrichtung 6 ausgerichtet ist. Hinter dem Sensorelement 2 ist ein Magnet 3 angeordnet, der als Permanentmagnet ausgebildet ist und einen Arbeitsmagneten bildet, durch den die Anordnung aus Zahnrad 1 und Sensorelement 2 mit einem hier als Magnetisierung 4 bezeichneten Magnetfeld beaufschlagt wird, wobei die hauptsächliche Richtung der magnetischen Feldlinien des vom Arbeitsmagneten ausgehenden Magnetfeldes - Magnetisierung 4 - im wesentlichen rechtwinklig sowohl zur Bewegungskoordinate des Zahnrades 1, d.h. zu dessen Bewegungsrichtung 6, als auch zur Meßrichtung 5 des Sensorelements 2 ausgerichtet ist.

Die Zähne des Zahnrades 1 bilden in dieser Anordnung eine streifenförmige Zone periodisch wiederkehrender Bereiche wechselnder Beeinflussung eines Meßfeldes, welches durch eine Feldkomponente des Magnetfeldes 4 parallel zur Bewegungsrichtung 6 gebildet wird und in der Fig 1 nicht explizit dargestellt ist. Dieses Meßfeld entsteht durch die Auslenkung der magnetischen Feldlinien zu den Flanken der Zähne des Zahnrades 1 hin.

In Fig. 2 ist ein Ausführungsbeispiel einer erfindungsgemäßen Anordnung dargestellt, in der mit Fig 1 übereinstimmende Elemente wieder mit denselben Bezugszeichen versehen sind.

In dieser Anordnung wird als Bewegungsgeberelement anstelle des Zahnrades 1 in der Konfiguration aus Fig 1 ein Zahnrad 10 verwendet, das zwei streifenförmige Zonen periodisch wiederkehrender Bereiche wechselnder Beeinflussung des Meßfeldes aufweist, die um wenigstens nahezu eine halbe Periode der Bereiche wechselnder Beeinflussung des Meßfeldes in Richtung der Bewegungskoordinate des Bewegungsgeberelements versetzt angeordnet sind. Bei dem Zahnrad 10 sind diese streifenförmigen Zonen durch zwei Zahnkränze gebildet, die axial nebeneinander und in der Bewegungsrichtung 6 des Zahnrades, d.h. in seiner Umfangsrichtung, um einen halben Abstand zweier aufeinanderfolgender Zähne versetzt angeordnet sind. Dadurch ist jedem Zahn eines ersten der Zahnkränze eine Lücke des zweiten der Zahnkränze benachbart, und umgekehrt ist jeder Lücke des ersten Zahnkranzes ein Zahn des zweiten Zahnkranzes benachbart. Beispielsweise ist einer Lücke 11 im ersten Zahnkranz ein Zahn 13 im zweiten Zahnkranz und einem sich an die Lücke 11 im ersten Zahnkranz anschließenden Zahn 12 eine sich an den Zahn 13 im zweiten Zahnkranz anschließende Lücke 14 benachbart.

In der Anordnung nach Fig 2 ist ein Sensorelement 20 vorhanden, welches im Aufbau dem Sensorelement 2 der Anordnung nach Fig 1 entspricht, nur dass seine Meßrichtung 50 jetzt gegenüber Fig. 1 um 90° gsdreht ist und in axiale Richtung des Zahnrades 10 weist. Das Meßfeld vor einer jeden der Paarungen aus einem Zahn auf einem der Zahnkränze mit einer Lücke aus dem jeweils anderen der Zahnkränze wird jetzt gsbildet durch die Verformungen der magnetischen Feldlinien des Magnetfeldes ("Magnetisierung") 4 des Magneten 3 in der axialen Richtung des Zahnrades 10, d.h. wechselweise zu den Zähnen 13, 12, usw., der beiden Zahnkränze des Zahnrades 10 hin. Dabei ist das Meßfeld wechselweise gleich- oder gegensinnig zur Meßrichtung orientiert. Entsprechend gibt das Sensorelement 20 bei einer Drehung des Zahnrades 10 abwechselnd ein positives oder ein negatives Ausgangssignal ab. So werden beispielsweise in der Stellung des Zahnrades 10, in der sich die Paarung der Lücke 11 mit dem Zahn 13 vor dem Sensorelement 20 befindet, die Feldlinien des Magnetfeldes 4 in der Meßrichtung 50, nämlich zum Zahn 13 hin, ausgelenkt, was ein Meßfeld in positiver Meßrichtung 50 hervorruft und damit einem positiven Ausgangssignal entspricht. Wird das Zahnrad 10 weiter gsdreht, bis die Paarung aus dem Zahn 12 und der Lücke 14 dem Sensorelement 20 gegenübersteht, so kommt es vor der Anordnung aus Lücke 14 und Zahn 12 zu einer Auslenkung der Feldlinien des Magnetfeldes 4 in entgegengesetzter Richtung, d.h. entgegen der Meßrichtung 50, was ein Meßfeld in negativer Meßrichtung 50 hervorruft und damit einem negativen Ausgangssignal entspricht.

Bezüglich des Ausgangssignals des Sensorelements 20 bedeutet der Versatz der beiden Zahnkränze in Umfangsrichtung, d.h. in der Bewegungsrichtung 6, um einen halben Abstand zweier aufeinanderfolgender Zähne eine (elektrische) Verschiebung um 180°.

Durch die erfindungsgemäße Anordnung wird sichergestellt, dass auch bei Zahnrädern mit grober Teilung immer eine eindeutige Zuordnung des Ausgangssignals des Sensorelements 20 zu einer bestimmten Position des Bewegungsgebers 10 entlang der Bewegungskoordinate, d.h. in der Bewegungsrichtung 6, gegeben ist.

Die vorstehend beschriebene Anordnung kann auch zusammen mit Hall-Sensoren für eine entfernungsunabhängige Zustandserkennung eingesetzt werden und ist daher nicht auf den Einsatz von MR-Sensoren beschränkt.

In einer Abwandlung des vorstehend beschriebenen Ausführungsbeispiels der wird ein "herkömmliches" Zahnrad 1, wie es in der Anordnung nach Fig 1 dargestellt ist, mit einem Sensorelement der Gestaltung des Sensorelements 20 aus der Fig 2 kombiniert. Bei der so geschaffenen Anordnung werden zugleich das Sensorelement 20 und der Magnet 3 an eine der äußeren Kanten des Zahnrades 1- in dessen axialer Richtung betrachtet - versetzt. Das Meßfeld wird dabei durch axiale Feldkomponenten des Magnetfeldes 4 im Bereich der Kante des Zahnrades 1 gebildet In diesem Fall ergibt sich am Sensorelement 20 ein unipolares Ausgangssignal. Aus dessen Amplitude können die Zustände, in denen sich ein Zahn oder eine Lücke dem Sensorelement 20 gegenüber befinden, unterschieden werden.

## Patentansprüche

1. Anordnung zum Bestimmen der Position eines die Ausbildung eines Magnetfeldes periodisch entlang seiner Bewegungskoordinate beeinflussenden Bewegungsgeberelements mit einem Sensorelement, welches entlang einer Meßrichtung gegenüber wenigstens der Polarität des Magnetfeldes empfindlich und zum Abgeben eines Meßsignals in Abhängigkeit von einer in der Meßrichtung gemessenen, als Meßfeld bezeichneten Feldkomponente des Magnetfeldes ausgebildet ist, wobei die Meßrichtung des Sensorelements wenigstens nahezu rechtwinklig zur Bewegungskoordinate des Bewegungsgeberelements ausgerichtet ist.

2. Anordnung nach Anspruch 1,
**dadurch gekennzeichnet,**
**dass** das Bewegungsgeberelement in einer streifenförmigen Zone einer sich entlang der Bewegungskoordinate des Bewegungsgeberelements erstreckenden Hauptfläche angeordnete, periodisch wiederkehrende Bereiche wechselnder Beeinflussung des sich parallel zur Hauptfläche und wenigstens weitgehend rechtwinklig zur Bewegungskoordinate des Bewegungsgeberelements ausbildenden Meßfeldes aufweist und die Meßrichtung des Sensorelements wenigstens nahezu parallel zur Hauptfläche des Bewegungsgeberelements ausgerichtet ist.

3. Anordnung nach Anspruch 2,
**dadurch gekennzeichnet,**
**dass** das Bewegungsgeberelement zwei streifenförmige Zonen periodisch wiederkehrender Bereiche wechselnder Beeinflussung des Meßfeldes aufweist, die um wenigstens nahezu eine halbe Periode der Bereiche wechselnder Beeinflussung des Meßfeldes in Richtung der Bewegungskoordinate des Bewegungsgeberelements versetzt angeordnet sind.

4. Anordnung nach Anspruch 2 oder 3,
**dadurch gekennzeichnet,**
**dass** die Zonen periodisch wiederkehrender Bereiche wechselnder Beeinflussung des Meßfeldes durch abwechselnd im wesentlichen senkrecht zur Hauptfläche des Bewegungsgeberelements vor- und rückspringende Ausformungen eines vom Bewegungsgeberelement umfaßten, magnetisierbaren Werkstoffs gebildet sind

5. Anordnung nach Anspruch 4,
**gekennzeichnet durch** einen Arbeitsmagneten zum Beaufschlagen der Anordnung mit dem Magnetfeld, wobei die hauptsächliche Richtung der magnetischen Feldlinien des vom Arbeitsmagneten ausgehenden Magnetfeldes wenigstens weitgehend rechtwinklig sowohl zur Bewegungskoordinate des Bewegungsgeberelements als auch zur Meßrichtung des Sensorelements ausgerichtet ist.

6. Anordnung nach Anspruch 2 oder 3,
**dadurch gekennzeichnet,**
**dass** die Zonen periodisch wiederkehrender Bereiche wechselnder Beeinflussung des Meßfeldes durch sich abwechselnde, entgegengesetzte magnetische Pole eines vom Bewegungsgeberelement umfaßten, magnetisierten Werkstoffs gebildet sind

7. Anordnung nach Anspruch 2,
**dadurch gekennzeichnet,**
**dass** das Sensorelement gegenüber oder neben einem bezüglich der Bewegungsrichtung seitlichen Randbereich der streifenförmigen Zone periodisch wiederkehrender Bereiche wechselnder Beeinflussung des Meßfeldes des Bewegungsgeberelements angeordnet ist.

8. Anordnung nach Anspruch 3 oder einem der Ansprüche 4 bis 6 in Verbindung mit Anspruch 3,
**dadurch gekennzeichnet,**
**dass** das Sensorelement als differentielles Hall-Sensorelement mit zwei Teil-Sensorelementen ausgestaltet ist, von denen je eines gegenüber je einer der Zonen periodisch wiederkehrender Bereiche wechselnder Beeinflussung des Meßfeldes angeordnet ist.

9. Anordnung nach einem der Ansprüche 1 bis 7,
**dadurch gekennzeichnet,**
**dass** das Sensorelement als magnetoreastives Sensorelement ausgebildet ist.

10. Anordnung nach einem der Ansprüche 1 bis 9,
**dadurch gekennzeichnet,**
**dass** das Bewegungsgeberelement linear ausgebildet ist.

11. Anordnung nach einem der Ansprüche 1 bis 9,
**dadurch gekennzeichnet,**
**dass** das Bewegungsgeberelement drehsymmetrisch ausgebildet ist.
